# EUROPEAN PATENT SPECIFICATION

(11) **EP 1 724 716 B1**
(45) Date of publication and mention of the grant of the patent: **06.11.2019**
(21) Application number: 05010920.6
(22) Date of filing: 20.05.2005
(51) Int. Cl.: G06N 5/00, G05B 15/00, G05B 19/00, B22C 25/00

(54) **Optimization process of a metal casting production process**
Optimierungsverfahren eines Metallgiessereiverfahren
Procédé d'optimisation d'un procédé de coulée de métal

(43) Date of publication of application: 22.11.2006
(73) Proprietor: MAGMA Giessereitechnologie GmbH, 52072 Aachen (DE)
(72) Inventor: Nordgaard Hansen, Preben, 52072 Aachen (DE); Schaefer, Wilfried, 52072 Aachen (DE); Dariusz Lipinski, Marek, 52072 Aachen (DE); Sturm, Jörg Christian, 52072 Aachen (DE); Schneider, Marc Christopher, 52072 Aachen (DE)
(74) Representative: Nordic Patent Service A/S

(56) References cited:
- DE-A1- 10 309 930
- US-B1- 6 298 898
- US-B1- 6 816 820
- SANG D CHOI ET AL INSTITUTE OF ELECTRICAL AND ELECTRONICS ENGINEERS: "A simulation study of an automotive foundry plant manufacturing engine blocks" PROCEEDINGS OF THE 2002 WINTER SIMULATION CONFERENCE. WSC'02. SAN DIEGO, CA, DEC. 8 - 11, 2002, WINTER SIMULATION CONFERENCE, NEW YORK, NY : IEEE, US, vol. VOL. 1 OF 2. CONF. 35, 8 December 2002 (2002-12-08), pages 1035-1040, XP010624066 ISBN: 0-7803-7614-5
- J.C. STURM ET AL.: "Stand der Simulation für Gusseisen" GIESSEREI KOMPAKT, vol. 02, 2004, pages 4-15, XP002337961 Düsseldorf : Gießerei-Verlag
- G. HARTMANN UND R. SEEFELDT: "Die zweite Generation von Simulationnswerkzeugen" GIESSEREI, vol. 91, no. 2, 2004, pages 38-42, XP009050761
- E. FLENDER, L. KALLIEN, J.C. STURM: "Cost Effective Casting Manufacturing by Means of Computer Simulation" 63RD WORLD FOUNDRY CONGRESS, 1998, pages 1-14, XP002337962 Budapest
- P.W. CLEARY, J. HA, M. PRAKASH AND T. NGUYEN: "SPH: a new way of modelling high pressure die casting" 3RD CONFERENCE ON CFD IN THE MINERALS AND PROCESS INDUSTRIES, 10-12 DECEMBER 2003, 2003, pages 421-426, XP002337963 CSIRO, Melbourne, Australia
- J. HA, P.W. CLEARY, V. ALGUINE AND T. NGUYEN: "Simulation of die filling in gravity die casting using SPH and MAGMASOFT (tm)" 2ND CONFERENCE ON CFD IN THE MINERALS AND PROCESS INDUSTRIES, 6-8 DECEMBER 1999, 1999, pages 423-428, XP002337964 CSIRO, Melbourne, Australia
- P.W. CLEARY AND J. HA: "Three dimensional modelling of high pressure die casting" 2ND CONFERENCE ON CFD IN THE MINERALS AND PROCESS INDUSTRIES, 6-8 DECEMBER 1999, 1999, pages 437-442, XP002337965 CSIRO, Melbourne, Australia
- DATABASE COMPENDEX [Online] ENGINEERING INFORMATION, INC., NEW YORK, NY, US; LEWIS R W ET AL: "Finite element simulation of metal casting" XP002338038 Database accession no. E2000114995486 -& LEWIS R W ET AL: "Finite element simulation of metal casting" INT J NUMER METHODS ENG; INTERNATIONAL JOURNAL FOR NUMERICAL METHODS IN ENGINEERING 2000 JOHN WILEY & SONS LTD, CHICHESTER, ENGL, vol. 47, no. 1, 2000, pages 29-59, XP002337966
- DATABASE COMPENDEX [Online] ENGINEERING INFORMATION, INC., NEW YORK, NY, US; MIRBAGHERI S M H ET AL: "3D computer simulation of melt flow and heat transfer in the lost foam casting process" XP002338039 Database accession no. E2003447697355 -& MIRBAGHERI S M H ET AL: "3D computer simulation of melt flow and heat transfer in the lost foam casting process" INT. J. NUMER. METHODS ENG.; INTERNATIONAL JOURNAL FOR NUMERICAL METHODS IN ENGINEERING OCT 7 2003, vol. 58, no. 5, 7 October 2003 (2003-10-07), pages 723-748, XP002337967
- DATABASE COMPENDEX [Online] ENGINEERING INFORMATION, INC., NEW YORK, NY, US; XP002338040 Database accession no. E2001336613419 -& WU M ET AL: "Numerical simulation of the casting process of titanium tooth crowns and bridges" J. MATER. SCI. MATER. MED.; JOURNAL OF MATERIALS SCIENCE: MATERIALS IN MEDICINE 2001, vol. 12, no. 6, 2001, pages 485-490, XP002337968
- DATABASE INSPEC [Online] THE INSTITUTION OF ELECTRICAL ENGINEERS, STEVENAGE, GB; FLEURY G ET AL: "Multi-agent approach and stochastic optimization: random events in manufacturing systems" XP002338041 Database accession no. 6316460 -& FLEURY G ET AL: "Multi-agent approach and stochastic optimization: random events in manufacturing systems" Journal of Intelligent Manufacturing Kluwer Academic Publishers Netherlands, vol. 10, no. 1, 1999, pages 81-101, XP002337969 ISSN: 0956-5515
- DATABASE COMPENDEX [Online] ENGINEERING INFORMATION, INC., NEW YORK, NY, US; GREMAUD MARCO ET AL: "Introducing casting simulation in industry: The steps towards success" XP002338042 Database accession no. E2004298269563 -& GREMAUD MARCO ET AL: "Introducing casting simulation in industry: The steps towards success" SOLIDIFICATION PROCES. MICROSTRUC. SYMP.; SOLIDIFICATION PROCESSES AND MICROSTRUCTURES: A SYMPOSIUM IN HONOR OF WILFRIED KURZ; SOLIDIFICATION PROCESSES AND MICROSTRUCTURES: A SYMPOSIUM IN HONOR OF WILFRIED KURZ 2004, 2004, pages 27-32, XP009050674
- DATABASE INSPEC [Online] THE INSTITUTION OF ELECTRICAL ENGINEERS, STEVENAGE, GB; CHIUMENTI M ET AL: "Numerical simulation of aluminium foundry processes" XP002338043 Database accession no. 7962157 & DATABASE COMPENDEX [Online] ENGINEERING INFORMATION, INC., NEW YORK, NY, US; Database accession no. E2003457709292 -& CHIUMENTI M ET AL: "Numerical simulation of aluminium foundry processes" MODELING OF CASTING, WELDING AND ADVANCED SOLIDIFICATION PROCESSES - X. PROCEEDINGS OF THE TENTH INTERNATIONAL CONFERENCE 25-30 MAY 2003 DESTIN, FL, USA, 2003, pages 377-384, XP009050675 Modeling of Casting, Welding and Advanced Solidification Processes - X. Proceedings of the Tenth International Conference TMS - Miner. Metals & Mater. Soc Warrendale, PA, USA ISBN: 0-87339-555-7
- DATABASE COMPENDEX [Online] ENGINEERING INFORMATION, INC., NEW YORK, NY, US; SMITH T J ET AL: "Computer-aided engineering for the foundry industry" XP002338044 Database accession no. EIX91121032507 -& SMITH T J ET AL: "Computer-aided engineering for the foundry industry" FOUNDRYMAN; FOUNDRYMAN NOV 1990, vol. 83, no. 11, November 1990 (1990-11), pages 499-507, XP009050677
- G.C. HARTMANN, V. KOKOT AND R. SEEFELDT: "Numerical Optimization of Casting Processes - Leveraging coupled process simulation and multi object optimization to the manufacturing level" INTERNATIONAL CONGRESS ON FEM TECHNOLOGY , 21ST CAD-FEM USERS' MEETING NOVEMBER 12-14, 2003, 2003, pages 1-11, XP009050767 Germany
- A. BÜHRIG-POLACZEK ET AL., RWTH AACHEN - GIESSEREI INSTITUT ; J. JAKUMEIT ET AL., ACCESS E.V. MATERIALS + PROCESSES, AACHEN: "Simulation von Giessprozessen" SIMULATION IN DER PRODUKT UND PROZESSENTWICKLUNG, SYMPOSIUM NOVEMBER 5-7, 2003, 2003, pages 11-18, XP002337981 Bremen
- A. STRAUBE, FRAUNHOFER IPT, AACHEN AND G. MESSNER ET AL. RWTH, AACHEN: "Berücksichtigung der Werkstoffhistorie in der simulierten Fertigungsprozesskette" SIMULATION IN DER PRODUKT UND PROZESSENTWICKLUNG, SYMPOSIUM NOVEMBER 5-7, 2003, 2003, pages 31-38, XP002337982 Bremen
- J.C. STURM, MAGMA GIESSEREITECHNOLOGIE GMBH, AACHEN: "Optimierung von Giesstechnik und Gusteilen" SIMULATION IN DER PRODUKT UND PROZESSENTWICKLUNG, SYMPOSIUM NOVEMBER 5-7, 2003, 2003, pages 39-46, XP002337983 Bremen
- H. ANDRÄ ET AL., FRAUNHOFER ITWM, KAISERSLAUTERN: "Spezifische Strukturoptimierungsverfahren für Giessereien" SIMULATION IN DER PRODUKT UND PROZESSENTWICKLUNG, SYMPOSIUM NOVEMBER 5-7, 2003, 2003, pages 165-170, XP002337984 Bremen

## Description

The present invention relates to the field of design optimization and production planning in order to obtain cost effective and/or resource effective production of parts, in particular in production processes related to the production of cast products such as metallic castings and injection molded plastic parts. The present invention also relates to methods or systems which provide for coupling quantitative casting property predictions and casting design optimization loops with the optimization of local material requirements during component design, thereby improving the final design.

### BACKGROUND ART

Since the 1960's the digital computer has steadily been used more and more intensively to simulate different procedural aspects and phenomena in manufacturing processes. This development has intensively been supported by the continuous increase in computer power over the years. Today enough computer power is available at low costs to be able to carry out exceedingly complex and comprehensive simulations.

What has been known and used thus far through the use of simulation software has resulted in sub-optimization of different technical casting process production aspects.

For example, the textbook entitled: "Numerical Simulation and Modeling of Casting and Solidification Processes for Foundry and Cast-House", authored by Peter R. Sahm and Preben N. Hansen, published by Comite International des Associations Techniques de Fonderie, International Committee for Foundry Technical Associations, CIATF 1984 (hereafter referred to as "Hansen et al."); long ago described how to carry out simulation of casting processes to be able to design a casting layout and a casting process which would lead to castings with what was then a sufficient particular quality level for a particular characteristic of the casting. Further, Marek Dariusz Lipinski, disclosed a substantially very similar methodology, though providing greater detail, especially for the mold filling process, in a Ph.D. dissertation "Mold Filling Simulation for Casting Processes", Technical University, Aachen, November 4, 1996 (hereafter, "Lipinski").

Over the ensuing years many articles have been published on how to simulate and attempt to optimize, i.e., endeavoring but only ultimately sub-optimizing, different process aspects in casting processes. A series of conferences with proceedings have been held, including: "Modeling of Casting, Welding and Advanced Solidification Processes" held by The Engineering Foundation, U.S.A.

These ideas from 1984 forward have been commercialized in software products like MAGMASOFT® software for metal casting processes, where it is possible to simulate the filling process to be able to design a proper gating system and a correct way to fill a casting. Further, but within the same production step, the solidification process can be simulated to be able to check if the quality is satisfactory, as for example, in checking to determine whether the microstructure and the mechanical properties are acceptable and fulfilling the specifications as well as to check if any faults are to be expected in the casting process. Further it is possible to simulate the stresses which are generated in the different process steps in casting and heat treatment processes within the same production step to check whether these are acceptable or not.

Also in the field of plastic injection molding simulation, activities have been undertaken with software products like SIGMASOFT® software, a software product like MAGMASOFT® software having a plastics database and a user interface, and the Moldflow software product, *inter alia.* Peter Kennedy has also published some specific ideas for plastics in the book "Mold Filling of Injection Molds," Hanser Publishers, 1995.

The article by J.C. STURM et al.: "Stand der Simulation für Gusseisen" (GIESSEREI KOMPAKT, vol. 02, 2004, pages 4-15, XP002337961) presents an overview of the state in the art in the technique of simulating pig iron casting. The article describes a method in which a casting simulation program is included in an optimization loop. In this article however, the only production step reflected in a computer implemented process is the casting. Furthermore, the article does not mention optimizing in respect of a predetermined parameter towards an optimal value.

It may be fair to summarize the main aim of using simulation prior to the advent of the present invention in that it had been to improve the quality of cast metallic and plastic parts to be able to meet a particular one or more quality specifications; noting even so that such specifications may generally have been steadily increasing. Then when a particular pre-defined quality level had been sufficiently obtained in the resulting end-product, the goal had been reached and the simulation was not taken any further.

### DISCLOSURE OF THE INVENTION

On this background, it is an object of the present invention to provide a method for optimizing a process for producing a cast or molded product made by a number of production steps in respect of a predetermined parameter towards an optimal value in accordance with claim 1.

This method allows the overall process to be optimized towards a given parameter, such as the lowest manufacturing cost, the overall energy consumption, the lowest material consumption, or the lowest environmental load, shortest lead time inter alia. The process takes the interrelation between the process steps into account and can thus deduce the optimal solution towards a given parameter.

The optimized method can than be fed back into the respective overall production process to thereby provide input to the manufacturing machinery for the respective manufacturing sub-steps.

This object is also achieved by providing a system for optimal casting production in accordance with claim 9.

Further objects, features, advantages and properties of optimizing a process or a method for producing a cast product according to the invention will become apparent from the following detailed description and the drawings appended hereto.

### BRIEF DESCRIPTION OF THE DRAWINGS

In the following detailed portion of the present description, the invention will be explained in more detail with reference to the exemplary embodiments shown in the drawings, in which:
Fig. 1 is a flow chart diagram illustrating a method for optimizing a process for producing a cast product,
Fig. 2 is a flow chart diagram illustrating a casting process simulation procedure and phenomena to be simulated,
Fig. 3 is a general routing diagram illustrating a manufacturing optimization procedure,
Fig. 4 is a manufacturing routing diagram for a casting manufacturing process illustrating an optimization methodology,
Fig. 5 is a flow chart for the collection of data for an optimization method and software hereof.
Fig. 6, which includes the sub-part Figs. 6a, 6b, 6c and 6d, provides respective isometric and cross-sectional views of a first design of a casting part according to the present invention,
Fig. 7 is a cross section of a second design of a casting and core hereof,
Fig. 8 is a cross section of a third design of a casting (with no core used) hereof,
Fig. 9 is a cross section of a fourth design of a casting and 2 cores hereof,
Fig. 10 is a cross section of a casting and 3 cores of a fifth design hereof,
Fig. 11 is a first layout with a horizontal parting for the first design (see Fig. 6) hereof,
Fig. 12 is a second layout with a horizontal parting also for the first design (see Fig. 6) hereof,
Fig. 13 is a first layout with a vertical parting for the first design (see Fig. 6) hereof,
Fig. 14 is a second layout with a vertical parting for the first design (see Fig. 6) hereof,
Fig. 15 is a process diagram of an alternative embodiment of a design process hereof incorporating casting analyses therewith,
Fig. 16 is an alternative view of a process diagram for an alternative embodiment incorporating casting analysis with a design process,
Fig. 17 is a cast component, the design of which may be optimized hereby,
Fig. 18 is a load diagram depicting loading of a cast component,
Fig. 19 is a mould filling simulation,
Fig. 20 is a solidification simulation,
Fig. 21 is a simulation of a distribution of micro-structures in a cast part,
Fig. 22 is a simulation of defects such as porosities,
Fig. 23 is a simulation of yield strength,
Fig. 24 is a simulation of elongation,
Fig. 25 is a simulation of residual stresses,
Fig. 26 is a simulation of risering,
Fig. 27 is a simulation of gating,
Fig. 28 is a methodological pathway alternative of the present invention,
Fig. 29 is an alternative methodological pathway alternative of the present invention, and,
Fig. 30 is a further alternative methodological pathway alternative of the present invention.

### DETAILED DESCRIPTION

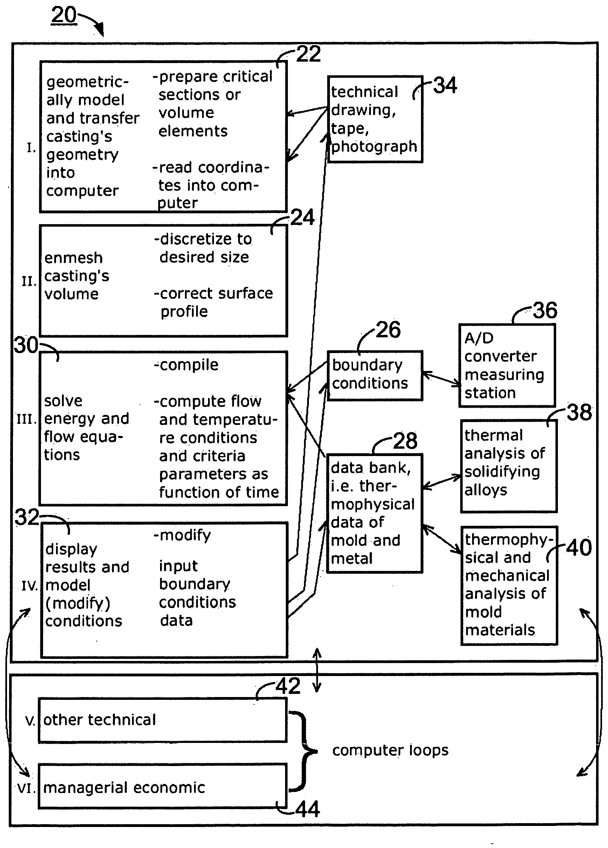

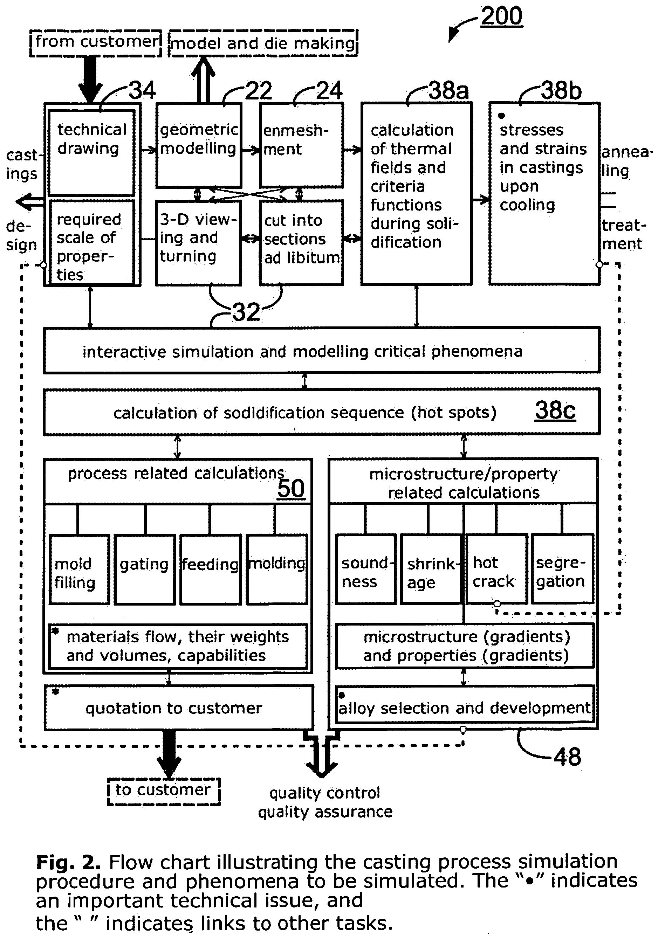

With reference to Figs. 1 and 2 a review of the different elements necessary to carry out a numerical simulation of casting processes is illustrated. The main steps of a simulation identified generally using the reference numeral 20 (see Figs. 1 and 2) are the following:
- A digital geometrical representation of the geometry of the simulation domain, see box 22;
- Enmeshment, which is subdivision of the calculation domain into many small elements, which are the bases for discretizing the differential equations (utilizing different solution algorithms) and in this way finding the solutions to the physical phenomena to be simulated, see box 24;
- Specifying the boundary conditions for the simulation project, see box 26;
- Attaching the necessary physical data for the different materials domains into the simulation model (data base or data bank), see box 28;
- Solving the differential equations for heat flow, fluid flow and stresses and strains using numerical algorithms, see box 30; and
- Displaying the results, see box 32.

As further shown in Fig. 1, various other elements may contribute to the overall process; as for example, first having technical drawing data, see box 34, particularly in electronic form, this data (and/or graphics, etc.) can be fed into the process, particularly at the first step 22, providing a geometrical representation of the ultimate part to be cast.

Similarly, other information may be fed, particularly in digital form, into the process. Such is shown for example by the feeding of measurement data, via an A/D converter, see box 36, into the boundary condition definition. Or, other analyses can be performed with the results fed into the overall process; examples here being shown by boxes 38 and 40 representing respectively a thermal analysis of solidifying alloys or a thermophysical and/or mechanical analysis of mold materials. Moreover, still further technical and/or administrative (e.g., managerial, financial and/or economic) data could be incorporated into the overall process as is indicated generally by the boxes 42, 44, in Fig. 1.

Still furthermore, several aspects and related models can be coupled to and/or expanded from within one or more of the otherwise discrete steps of this main simulation structure 20 as shown in a further detailed example of a casting simulation process 200 in Fig. 2. See e.g.:
- Criteria functions, which may combine in different formulas the parameters, which are the result of the simulation to be able to predict different phenomena, as for example the three solidification/thermal/cooling calculations 38a, 38b and 38c broken out (figuratively and/or actually) from a single set of calculations 38 in Fig. 1; and/or as for a further example, the additional microstructure calculations such as porosity formation, shrinkage formation, crack formation, erosion phenomena, cold shots, etc., all generally indicated by the box 48 in Fig. 2;
- Micro modeling of the formation of the microstructure during solidification of castings and during heat treatment of castings, box 38a, e.g.; and
- Models for simulation of stresses and strains, box 38b, e.g.

Additional and/or further broken out detailed calculations related to the overall process may also be included as is suggested generally by the box 50, which here may include the functionality of the box 40 of Fig. 1. Note also that all reference identifications (numerals) are intended to show similarity, not necessary identity of functionality(ies) throughout the discrete figures, as e.g., between Fig. 1 and Fig. 2. Thus, for example, the three boxes identified with a 32 in Fig. 2 are intended to demonstrate different display functionalities, not unlike, but in no way limitative of the functionalities more generally indicated in Fig. 1. Similarly, note that the calculations of box 30 in Fig. 1 may be understood to be distributed throughout numerous of the boxes of Fig. 2, and are thus not separately identified herein. Other add-on modules with more specific functionalities may also or alternatively be added into/onto an overall process 20 or 200 as well. Non-limitative examples, such as iron, steel, HPDC, LPDC and/or plastic injection molding add-on modules may be used, details of exemplary such modules being set forth hereinbelow.

In any case, in both figures, Figs. 1 and 2, it can be seen that a way to find the wanted technical process solution may include using human iteration where new simulation runs may be carried out after changing either the geometry, and/or the boundary conditions, and/or the thermophysical data, etc. Such a procedure can then be iteratively carried out any number of times until the user decides that a satisfactory solution is found.

However, as in other areas of leading edge development today, a further preferable means may include having a software program using an algorithm (in some instances, a substantially generic iteration algorithm) to carry out these iteration loops where a criterion is selected for the optimal solution (e.g., component or process cost or a particular material or a particular end quality criterion), so that it is no longer human iterations but automatic iterations on the computer, which finds the best technical solution for a given phenomena.

Then, as a further developed option to support the user in deciding for and selecting the best solution for him, one or a plurality of criteria may be selected and run in parallel so that the results from the one or a plurality of technical simulation runs can be presented to a human operator at the same time. Then, it may be easier for the human user to see which one of the potential one or more solutions may provide the best solution in a particular case. One means for achieving such an operation may include working in a scheme referred to as VTOS® (i.e., a "Virtual Try Out Space®" a sort of "Virtual Reality"), the results from all the technical simulation runs being presented on a computer display (e.g., on a screen) at the same time. The human user may then select which one of the potential one or more solutions may provide the best solution in a particular case.

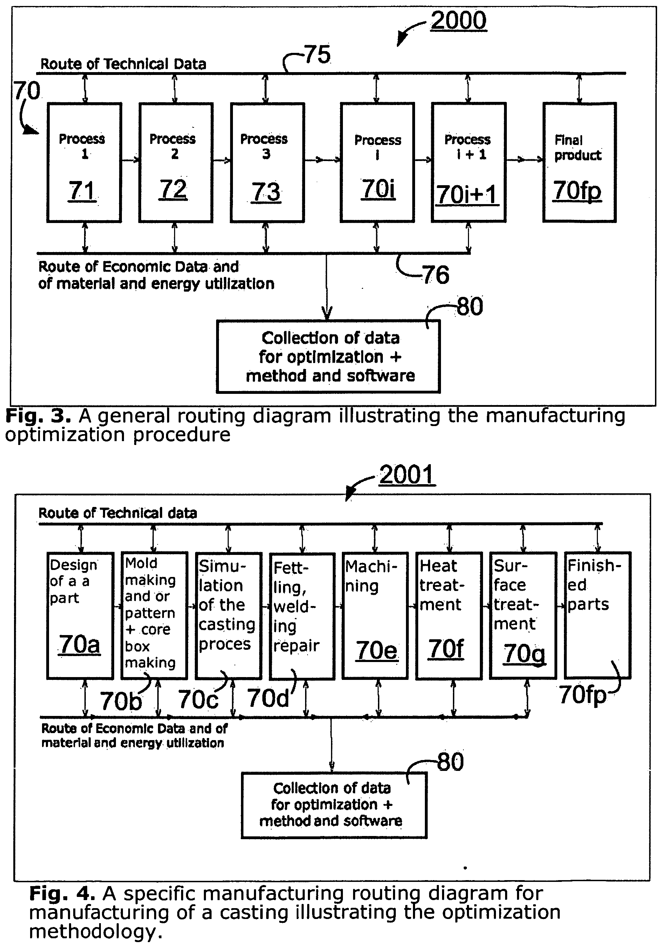

Examples of methodologies running in such a parallel or substantially simultaneous fashion are shown in Figs. 3 and 4 (note, the "parallel" or "simultaneous" phraseology is intended for descriptive purposes of preferred embodiments only; these terms are not intended to limit the methodologies to absolute parallelism or simultaneity as the relative timings of the individual sub-processes may not be concurrent or may occur in staggered or piecemeal fashions as well). Figs. 3 and 4 show substantially the same methodological structure; however, where Fig. 3 retains a generalized or generic scheme, Fig. 4 has taken on sub-processes useful in metal or plastic castings as a specific example of the generalized process.

In looking first more specifically at the generalized form of Fig. 3, the overall process, identified here with the numeral 2000 has one or a plurality of sub-processes, generally identified as sub-processes 70. As shown, these sub-processes may include specified sub-processes 71, 72 and 73, for example; and/or may further include any number of sub-processes 70i and/or 70i+1. Moreover, the completion of the finished product may be identified as well as the "step" 70fp even if such a step is not entire "sub-process" itself, marking instead merely the completion of the overall process 2000. Similarly, any one or more of the sub-processes 70 may also not necessarily include entire sub-processes; rather only including a single step, or mere transition to another step or separate sub-process.

Then, still in Fig. 3, it can be noted that separate channels for data input, see e.g., technical data input line 75 and economic/material/energy data input line 76, may be connected to each of the sub-processes 70. These may actually be separate data input lines, or they may actually be a common line, as in a common serial bus connection, or other common data input/output connection, or there may be one or more further separate lines providing the data connections to the appropriate sub-processes. Similarly, it may be that the data lines are not connected to each and every sub-process, rather only those to and/or from which data is to be communicated (e.g., it may be that not all sub-processes will have an economic data tie). In any case, it may also be noted that the two way arrows connected herebetween are intended to show the preferability that data be provided in either direction so that input may be taken in for the sub-process to calculate an output value which may then be communicated back, e.g., via the technical data line 75 to another sub-process which may then use that calculated data to reach another particular result. Note, arrows directly between sub-processes are shown also to indicate the possibility that sequential transition between any two or more sub-processes directly may be used herein as well; however, such is not necessary, where indeed, more substantial parallel and/or piecemeal back-and-forth transactions may be performed.

In any case, the ultimate conclusions of any one or more sub-processing will preferably be communicated to the optimization sub-process 80, wherein the results may individually be evaluated and/or displayed for ultimate use/decision by the human user. In a VTOS model, one or a preferable plurality of sub-processing results may be displayed substantially simultaneously (even if not necessarily achieved simultaneously), or sequentially, for review and comparison by the human operator and ultimate decision-making thereby. Thus, step 80 may include one or more display steps. This iteration may be performed by the operator or by a computer implemented algorithm.

The more specific example 2001 in Fig. 4 of such a generalized model 2000, includes example sub-processes 70a - 70g for a metal or plastic casting process. More particularly, these example sub-processes include, without limitation hereto, a design sub-process 70a, a mold/pattern/box making sub-process 70b, a casting simulation sub-process 70c, fettling sub-process 70d, machining 70e, heat treatment 70f and a surface treatment sub-process 70g. These are described in further detail herein below. This is but one example of a collection of sub-processes. Desirably then, based upon one or more certain input data, as for example, certain preferred technical and/or economic data, one or more conclusions are reached and communicated to the sub-step 80 for optimization. Note, a plurality of alternative input data sets may be used to generate a corresponding plurality of output conclusion sets for ultimate use in comparison by the user/operator as for example in a VTOS or virtual reality operation at box 80, e.g.

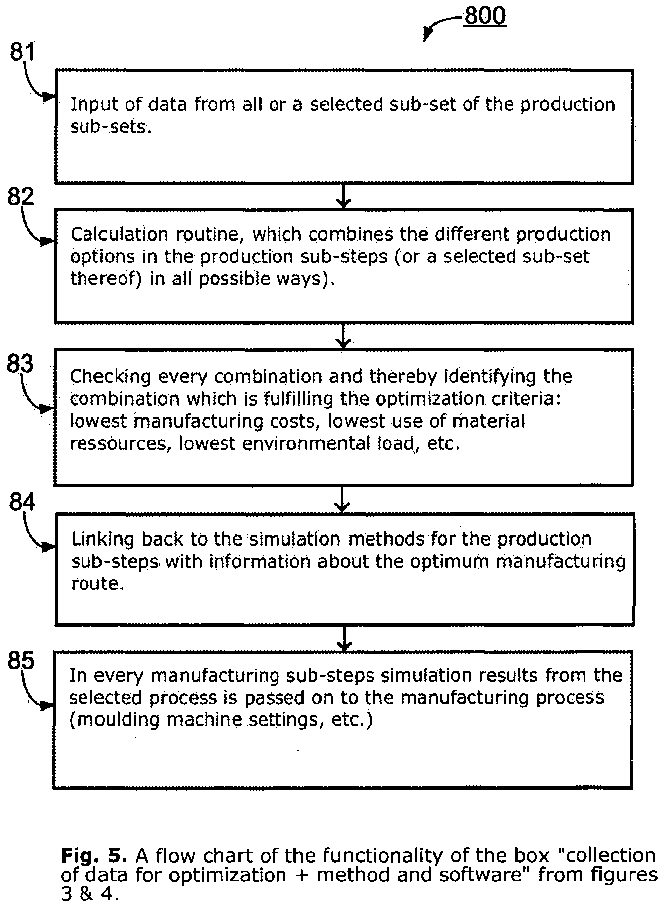

Note, the optimization methodology, which so far in the figures 3 and 4 has been illustrated by example with the box 80 "Collection of data for optimization + method and software," may take various forms, as for example the display function suggest above. However, such a sub-process 80 may take a form such as is shown by the sub-process 800 in Figure 5 including more elaborate functionality, i.e., may include more sub-steps. The Fig. 5 example methodology 800 may thus start at substep 81 with data input from the production sub-steps for different possible ways of manufacturing in every sub-step (or a selected sub-set thereof).

After this, in steps 82 and 83, one or more or all possible combinations of the different ways of manufacturing in the different sub-steps/sub-processes 70 (sub-steps and sub-processes are used interchangeably herein) are analyzed related to the optimization criterion, which can be the lowest manufacturing cost, the lowest materials consumption, the lowest environmental load, etc., or any combination hereof. Doing this the most optimal manufacturing route can be found.

This can be followed in steps 84 and 85 by giving this information back to the different manufacturing sub-steps/sub-processes (step 84) to be used (via the simulation results) to give input to the actual manufacturing machinery (step 85) for the different manufacturing sub-steps.

A result may be a desirable methodology for design optimization and production planning setting the frame for cost effective and/or resource effective production of parts, especially metallic castings and injection molded plastic parts.

As is described herein, this numerical simulation technique may thus be commercialized to be a turnkey solution, which is very user friendly, fast, comprehensive and accurate, which may include features like:
- Completely menu driven user interface;
- Project management module;
- Pre-processor including solid geometry modeling, CAD data transfer to and from other and conventional CAD-systems and automatic enmeshment;
- Simulation modules for process description (fluid flow, solidification and heat transfer, stresses and strain, microstructure development in solidification and heat treatment processes) and solution algorithms to solve the physical equations and provide (via simulation runs) the simulation results;
- Post-processor for 3D visualization and evaluation of results;
- Thermo-physical data base;
- Software releases for single processor computers, dual processor computers and multi processor computers (Cluster technologies);
- Special add-on modules for specific casting processes: HPDC-module for simulating the high pressure die casting process, LPDC-module for simulating the low pressure die casting process, DISA®-module for simulating the DISAMATIC® casting process, Iron-module for simulating the solidification of iron casting processes, Steel-module for simulating the specifics of steel casting processes, Stress-module for simulating stresses and distortions in casting processes, Cosworth-module for simulating the specifics of the Cosworth casting process, etc.; and
- Software for automatic initiation of the simulation iteration loops using generic algorithms and criterions to automatically select the optimal technical solution.

The pre-processor can include solid geometry modeling, CAD data transfer and automatic enmeshment. This enables an easy and fast geometry description of complex shaped castings and mould geometries. All parts of the geometry can be manipulated. This allows rapid modifications of the gating and feeding system based on the results of previous simulation runs. To facilitate the design of cooling channels in permanent molds, feeding sleeves and chills and the easy construction of a multiple cavity permanent mold (or die), standard components can be saved and loaded from a database. Optionally available general and direct interfaces like STL allow external generated geometries constructed within different CAD systems to be read into the pre-processor. An automatic enmeshment functionality allows for creation of a sound enmeshment in minutes. The user defining global control parameters can adjust accuracy and coarseness of the mesh.

Simulating mould filling allows the investigation of the filling pattern in both dies, permanent moulds, sand moulds and around cores for all shape casting processes; mainly by solving the Navier-Stokes equations coupled with the energy equation in a way, which was described in above-cited literature references of Hansen et Al., Lipinski and Kennedy. The following information may thus be obtained:
- Mould filling pattern;
- Metal/plastic velocities in the die or mould cavity
- Loss of superheat and temperature distribution during mould filling; and
- Potentials for cold shots, cold laps, flow lines and possible sand erosion during filling and the likelihood of gas entrapment and entrainment.

This type of information assists the foundryman in the following objectives:
- Optimizing the gating system;
- Prediction of sand erosion and penetration due to critical velocities in the melt;
- Determination of filling times dependent on the gating system, pouring/filling rates or pressure in bottom stopped ladles
- The optimal placements of overflows in die casting
- Investigation of turbulences, splashes and "hammer effects" within the melt causing entrapment of slag, air inclusions and droplet generation at the flowing melt front;
- The use of filters.

Simulating heat flow and solidification is a powerful tool for the investigation of casting solidification and cooling. It takes into account liquid and solid contraction and shows the feeding of the casting and porosity formation and provides information about:
- Solidification patterns and feeding paths;
- Solidification times, temperature gradients and cooling rates at all points of the casting;
- Critical regions in the casting;
- Thermal loading of dies, cores and moulds (to be used as load input to the following calculations of stresses, strains and distortions such as segregations and inclusions); and
- Cooling curves at any location within the casting, mould or die.

This kind of information assists the foundryman in the following objectives:
- The optimal methoding of castings and the layout of permanent moulds and dies, and the pattern- and core box design for sand casting processes
- The use of feeders and feeding aids, minimization and effective use of chills
- Investigation of process conditions such as optimal time to remove the casting, cooling needs of the mould material, deterioration of molding sand and related gas evolution, effect of chilling, heat impact to cores resulting in deterioration and gas evolution
- Provides quantitative feeding needs for any feeder
- Provides insight to methoding changes seeking to remove porosities and shrinkages.

The batch functionality provides the capability of modeling multi-cycle casting processes in permanent moulds and provides information about:
- The temperature distribution within the casting and permanent moulds at any time.
- The number of casting cycles needed to reach the "steady state" production conditions in the start up production phase, where the permanent moulds are heated to the "steady state" thermal production balance. The associated change in the quality of the cast part can also be observed.
- Optimal casting removal time (for a given removal temperature).

This batch functionality supports the following objectives:
- Optimal manufacturing conditions for permanent mould and die casting processes;
- Optimal layout of dies and cooling and heating channels;
- The minimization of cycle times by the identification of the earliest casting ejection time;
- Pin-pointing of critical areas in the die where; thermal loading is critical and could reduce die life;
- The achievement of constant casting quality; and
- General process understanding.

In post-processing, there can be obtained a 3D visualization and evaluation of results (see Fig. 2, and Figs. 6-14 e.g.). The 3D post-processor allows the user to view the results from any direction and slice through the results from any direction and to slice through certain areas, thereby identifying critical areas of the casting. Temperatures in the casting and mould can be viewed at any stage of the casting process. Porosity levels, the filling pattern as well as the thermal history can be pinpointed and viewed as an X-ray film too. Various criteria (criteria functions) help the user to condense the information from filling, solidification or feeding with one comprehensive picture. Cooling curves, velocity, pressure, stresses and strains can be shown at any location.

The data base module may provide the user with the necessary thermophysical data to perform the simulation runs. The user may then have the option to add or make changes to the thermophysical data sets for different alloy compositions or materials and to assign them to different databases. Process conditions and the geometry of different objects (feeders, feeder sleeves, filters, gating systems, etc. can be stores as required).

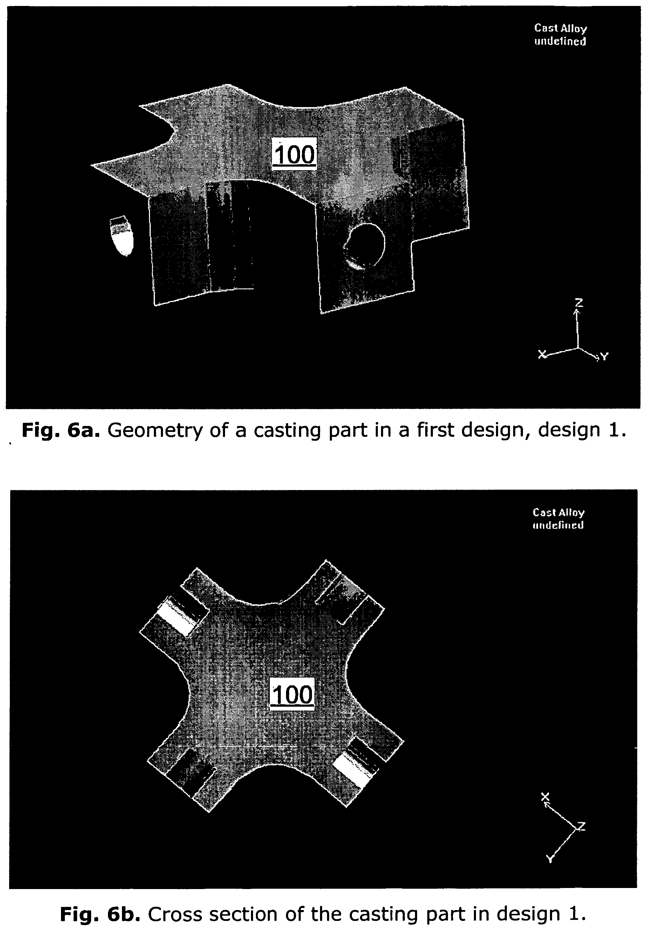

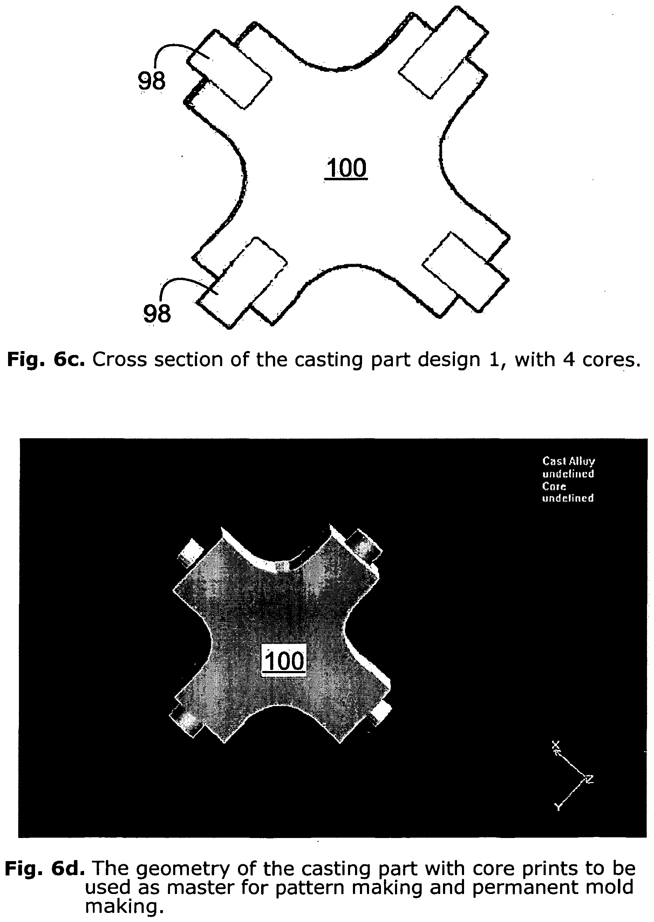

Figs. 6-14 show graphic examples of optimization variables relative to a particular cast product as discussed herein. In particular, Fig. 6 initially provides views of a cast product 100 which could be of any shape, but for our purposes is a shape which includes one or more intentionally formed voids as defined by cores 98 in Fig. 6. Note, as shown in Fig. 6c, four cores 98 are used to form corresponding voids in the cast product 100. Further description of the product of Fig. 6 will be addressed below.

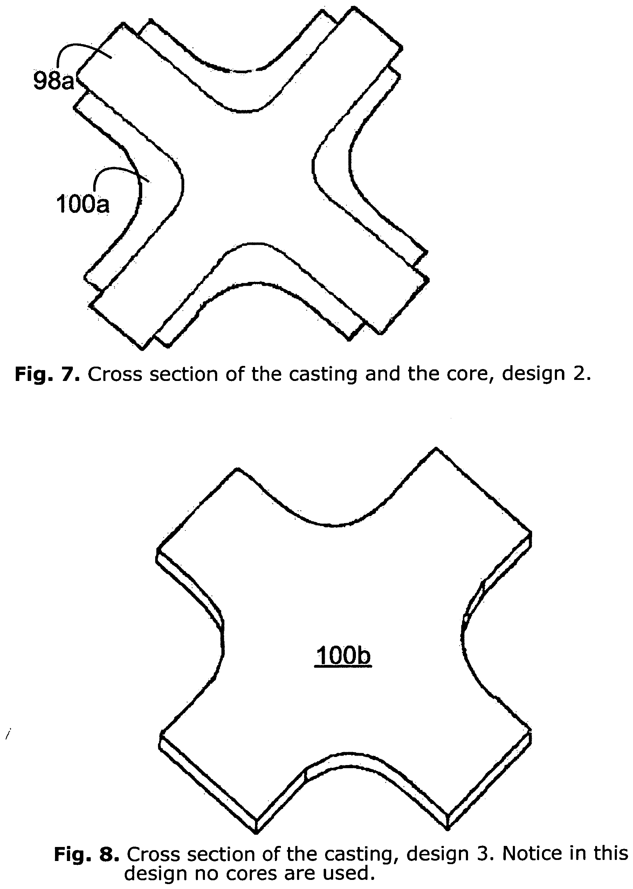

However, first several alternative cast products will first be described beginning with the product 100a of Fig. 7 which has a single multi-armed core 98a used to form similar voids in the end product 100a. A similar, though voidless product 100b is shown in Fig. 8 (the four voids are to be machined in a machining process). The primary point in showing such alternative structures is to highlight various forms providing similar end-products recognizing that different internal or other constraints may be used in their formation, noting even so that the different forms, including the different cores can an will have various impacts on the resulting products. Some will be easier to make. Others will use more or alternatively less material (in some cases more will be better, as for example to make a stronger product; whereas in other cases, more material will seem a waste in that the strength will not be advantageous).

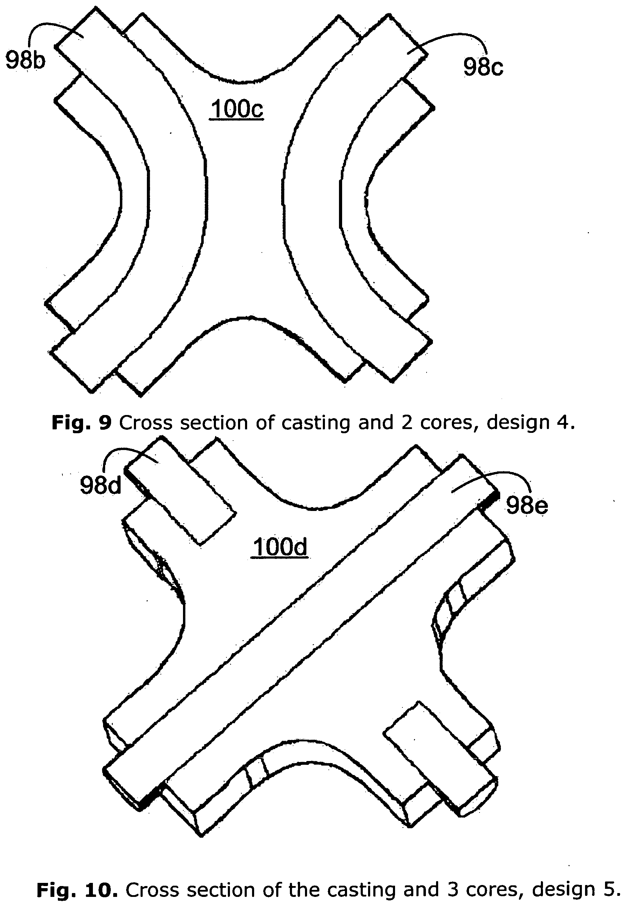

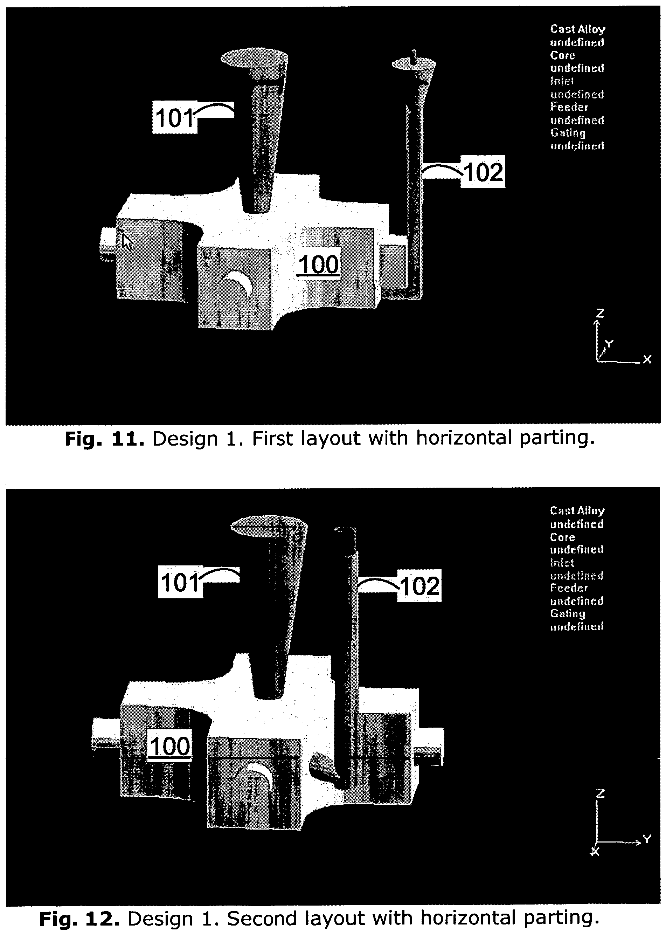

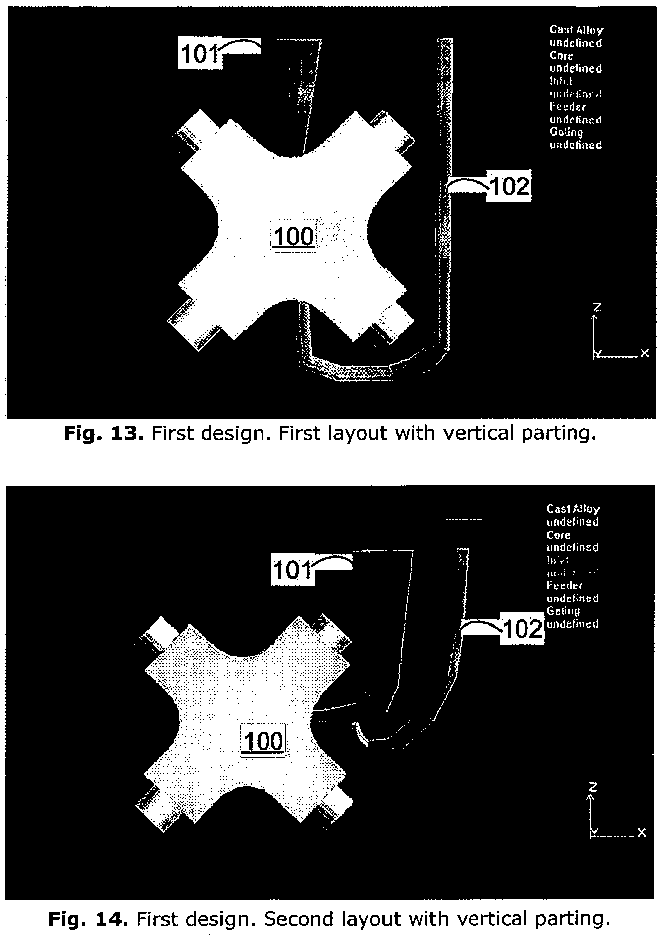

Still further alternatives in the same fashion are shown in Figs. 9 and 10, where for example, an end-product 100c is shown in Fig. 9 with two cores 98b and 98c (these perhaps simplifying one aspect of production, while perhaps simultaneously increasing complexity of another aspect); and where an alternative end-product 100d is shown in Fig. 10, this example including three cores, represented by cores 98d and 98e. The Fig. 10 example may thus simplify the Fig. 6 example in requiring fewer parts (three cores versus four cores); however, there may be increased complexity involved in removing such an elongated core 98e, or perhaps a trade-off in reduced end-product mass, thus off-setting strength, inter alia. Moving to the examples of Figs. 11-14; four alternative molding processes are shown; each of these having various trade-offs in either functionality or end quality, inter alia. In Fig. 11, a first molding process is shown for formation of an end-product 100 (as in the first design 100 of Fig. 6 (with four cores)). Here, a horizontal parting is shown with a central feeder 101 and an underside inlet 102. An alternative second horizontal parting is shown in Fig. 12 with again a central feeder 101, but with a lateral/side inlet 102. Then, in Figs 13 and 14, alternative vertical partings are shown for a substantially similar end-product 100; in these cases, a topside feeder 101 is shown in Fig. 13 with a bottomside inlet 102; whereas a side feeder 101 and inlet 102 are shown in Fig. 14. These four examples are also intended to demonstrate the various alternatives, here merely in the formation process, which may have particular impact on the ultimate calculations for a preferred outcome. Certain desirable outcome characteristics may make one or more of these alternatives more attractive in one scenario, and vice versa, depending upon which criteria may be more important in one or another application.

As mentioned above, various other alternative add-on modules may be found usable herewith, each such module taking into account particularly preferential characteristics or phenomena for the particular end-product, or the particularly desired procedure, inter alia. Examples hereof will be addressed hereafter.

### Iron add-on module

Cast iron quality may be determined decisively by the applied melting practice, melt treatment and metallurgy. The prediction of feeding and micro structure formation during solidification and solid state transformation of cast irons may require an accurate consideration of the microscopic phase formation, the foundries actual melt analysis and the type and effect of melt treatment and inoculation. Microscopic kinetic growth models, which predict the type and amount of graphite formed, give an accurate simulation of competing graphite expansion and austenite contraction forces through which shrinkage or porosity are determined. This procedure also allows the prediction of the final microstructure and mechanical properties in the casting.

The output from coupling such an add-on iron module to the general simulation methodology is the information, which will be gained about:
- The amount of grey and white iron in the different locations in a casting;
- Eutectic cell size and lamella spacing for grey iron
- Fraction of Austenite, primary graphite, eutectic and white iron phase;
- Graphite nodule count for ductile iron;
- Nodularity for CGI;
- Cooling curves for any point of the casting showing the degree of undercooling, thermal recalescence and growth temperature as function of cooling rate and time;
- The fraction of liquid at different stages of solidification;
- Locates hot spots in the casting and the last areas to solidify;
- Thermal modulus at any location in the casting;
- Shrinkage and porosity formation in ductile iron, CGI and gray iron castings; and
- Pearlite and ferrite distribution in the casting;
- Distribution of hardness and mechanical properties (yield- and tensile strength, elongation at fracture, Young's modulus).

These data can via a link to conventional Finite-Element-load simulation software programs be used to improve the results of the load calculations. In this way the local variation in these data can be used instead of the conventional way of using homogeneous non varying data for the casting part domain as the initial and boundary conditions for the load calculation simulations

### Steel add-on module

The concept is to provide extended capabilities to support the technical simulation of the manufacturing route for steel castings, form layout through the casting and heat treatment processes. The simulation capabilities are extended with numerical models to calculate velocities and pressure of the metal in both the liquid melt in the casting as well as in the mushy zone driven by thermal and solutal natural convection forces. The effect of this flow on the thermal map in the solidifying casting is taken into account. The calculated velocities are also coupled with a micro segregation model for the dendritic scale, to track the redistribution of the alloying elements in the alloy and predict macro segregation.

To model the final microstructure and related mechanical properties in the heat treatment process the heat transfer during the heat treatment process based on the changing conditions during austenitization, quenching and tempering is taken into account. This information, together with the alloy composition, is coupled through a regression analysis based on transformation diagrams for hundreds of steel grates. The analysis provides a prediction of the local microstructures and mechanical properties throughout the casting.

In the pre-production planning and methoding the foundryman may be supported with information like:
- Volume and mass of the casting, machining allowances, gating system;
- Riser system, mould sand, core sand and chills;
- Fettling areas of the gating and feeding system;
- Key quantities such as the sand/metal ratio and yield;
- Modulus values for the complete casting and user specified feeding zones;
- Ladle discharge rate and pouring time as a function of ladle geometry.

Additional information from the add-on module may include:
- Velocity field in the casting due to both thermal and solutal natural convection;
- Visualization of the movement of tracer particles through the melt during solidification;
- Distribution of the alloy and trace elements throughout the casting (macro segregation).

Simulating the heat treatment process may give information about:
- Temperature distribution in the casting after each heat treatment step;
- Heating/cooling curves in the casting throughout heat treating cycles;
- Alloy and austenitization condition dependent CCT diagram linked with quench cooling curves;
- Martensite, bainite and ferrite/pearlite distributions in the quenched casting;
- Hardness distribution in the quenched and tempered casting;
- Yield strength, tensile strength end elongation distributions in the tempered casting.

### Add-on module for HPDC (high pressure die casting) process

The concept is to define and incorporate many if not all of the specific process parameters for this specific casting process, e.g.:
- Ejection time (controlled by time or casting temperature);
- Die opening sequence;
- Delay time (simulating the effect of cycle interruptions on the thermal balance in the die);
- Die closing sequence;
- Lead time until beginning of the next cycle;
- Individual control of each cooling or tempering channel (or channel loop);
- Definition of die spraying procedure;
- By the help of a shot curve calculator the die casting machine configuration for a specific casting geometry can be determined to give the optimal boundary conditions for the different shot phases to be used in the mould filling simulation.

The accurate filling simulation of the mould allows the identification of critical flow velocities, flow patterns, cold shots and critical areas for air entrapment. This information can be used to optimize the position and dimensions of runners, gates overflows and vents. The solidification and cooling off simulation can be used to establish the best cooling channel positioning and layout.

### Add-on module for LPDC (low pressure die casting) process

The concept is to define and incorporate many if not all of the specific process parameters for this specific casting process to be able to make comprehensive simulation of fluid flow and casting quality, e.g.:
- The die filling based on furnace temperature;
- The feeding conditions in the casting during solidification taking into account the applied pressure in the furnace and resultant static pressure in the liquid phase in the casting and the influence of gravity as well;
- The effect of individual cooling or heating channels as well as their control by time or a control thermocouple within the die or casting;
- The effect of die spraying or coatings;
- The influence of cores or inserts;
- The effect of the sequence of die opening and closing through the individual control of each die section as a function of temperature or time.

Simulation with this add-on functionality may enable the foundryman in the following objectives:
- Optimized filling of the mould cavity based on the applied pressure;
- Optimal applied feeding pressure and its removal time;
- Minimized die opening times;
- The best cooling channel positioning and layout as a function of time or a thermocouple within the die;
- Provide support for reduction of lead times and optimization of the entire processing cycle;
- The reduction in the thermal loading of cores, inserts and die sections to maximize die life.

### Plastic injection molding

This process is very similar to the HPDC process for metals, which was described above, so most of the technical issues are the same or similar. Again special one or more add-on functionalities to the general simulation systematic may be put in use to have the possibility to simulate this process with the production parameters, which are specific for this process. The viscosity for plastics (thermo-plastics) is much higher than for metals and another difference is that metals can be treated as incompressible in the casting process, but plastics on the other hand are compressible. This means that during the mould-filling phase of the casting process, it is possible, after the mould is filled with plastics, to inject, i.e., "fill in" more plastics by compressing the plastics already in the mould; a phenomenon, which may be simulated by the module hereof as well. In the cooling down process of thermo-plastics a specific phenomenon can take place; namely, surface shrinkage close to mass centers, a phenomenon which should be modeled with a special model. A peculiarity is often found with elastomers, wherein a hardening process takes place some time after the mould is filled with elastomer melt. This is a similar process to the solidification process for metals; however, even so, still other models have to be used to describe this process. It is more a chemical reaction where the solidification of metals is more of a physical process.

### Add-on module for stress/strain and distortion simulations

Utilizing such a module, the stresses and strains developing during solidification, cooling off and heat treatment of castings can be calculated predicting the residual stresses and distortions generated in the final casting product. Machining allowances can be defined too so the redistribution of the stresses/strains and distortions after machining can be simulated as well.

These results can be linked to conventional Finite-Element-load calculation programs, and may thus be used to provide the starting condition (initial conditions) for the load calculation simulations for the specific casting. In this way more accurate load calculations can be carried out.

### Other casting processes

Many different casting processes exist. For every process add-on modules may be implemented and used to specify the specific process parameters to simulate what is of specific technical interest for a given process. For investment casting processes, special attention has to be paid to radiation heat exchange. In the DISAMATIC casting process the heat transfer in the mould is of special interest, since the moulds are stacked together, so a heat exchange between the moulds may take place, which is incorporated, as well as the thermal deterioration of the sand to give input to the recycling process of the sand (sand plant). New developments in this process are "active up-hill bottom filling" of the moulds using a pump or a pressurized furnace and "active feeding", activating the feeders using compressed air. Again functionalities which can be specified in the add-on module may be taken into account in the simulations. For the Cosworth process, metal is pumped uphill into the moulds, which has to be described to set the boundary conditions for simulating the mould filling process. Further in one variation of the process the moulds are rotated after filling to enable the feeders to function by the use of gravity. Tilt casting processes and roll over processes rotate the moulds during the filling process, which is taken account in the add-on module, so it is possible to carry out simulations of the filling process under such circumstances.

Still further simulation alternatives may be included. Hereafter for example, simulations of processes which are related to and/or supporting the casting processes are described.

### Manufacturing of core boxes, metallic moulds and pattern plates.

Based on the geometrical data for the geometry to be manufactured it can be modeled how to program the machinery, which are used for the manufacturing and in this way estimate the manufacturing effort needed. An aspect here is to use the simulated distortion results from the add-on module for stress/strain simulations to modify the geometry of the pattern plates, metallic moulds and core boxes, so the final geometry of the cast product can be distortion free.

This information is used as a basis for the cost calculations, since in this way it will be know how much effort will be needed.

### Core shooting process.

Models may be used herein/herewith for simulation of the flow of sand filling a core box, using equations similar to the equations used to simulate mould filling for the metallic melts and the plastic melts. Special attention though has to be to the fact that the core sands are particulate materials, which has to be reflected in the models. The results of such simulations provide information on where to place vents in the core boxes and also core box life time can be estimated using models to describe the wear by the sand flowing into the core boxes dependent on the core shooter process and the inlets for the sand.

Further the curing process can be simulated to find the way to carry out curing to have the shortest cycle time possible for producing cores.

### Sand mould making process.

The filling process for the sand filling and building up the mould is simulated the same way as for the core shooting process. Again the interest is the similar in finding the right position of the vents on a DISAMATIC pattern plate and to estimate the life time of a pattern plate, which can be related to the way the molding machine is producing the mould and in this way finding the different possible technical possibilities, which are the basis information necessary for the cost calculations.

### Permanent moulds and dies.

The lifetime is here estimated by modeling the oscillating stresses and strains during the casting cycles, generated by the oscillating temperature fields due to the heat input from the castings, which has to be cooled away by typically cooling pipes. So during the lifetime fatigue will take place and destroy the mould/die determining the lifetime (faults like heat checkings). This information is used for the cost calculations.

### Fettling.

This process is cleaning the casting after being removed from the mould/die and removing the ingate system and risers. Different ways of doing this independent of the casting layout is the input for the economical calculations.

### Machining.

After fettling the casting is now ready for machining. The technical implication of the different designs has to be considered/modeled to be able to make the cost calculation.

### Heat treatment.

The way to simulate the technical aspects of this process has already been described in the section "Steel add-on module" above. These technical data are used to make the cost calculations.

### Surface treatment.

The technical implication of the different designs has to be considered/modeled to be able to make the cost calculation.

### Coupling design analyses with casting analyses.

Also disclosed herein are methods or systems for optimising local casting properties to meet the required local demands on component performance. Such may be accomplished using an integrated virtual optimization tool for casting process and design optimization. These methods or systems may be provided via a computer implemented process that couples quantitative casting property predictions resulting from different in-situ processes and casting design optimization loops to the optimization of local material requirements during component design, thereby generating a casting or component design which adjusts the local casting properties to the component's performance demands.

Previously, the optimization of casting component design has neglected consideration of local material property variations that may result from casting processes. On the other hand, casting process optimization has not considered the local requirements on the cast component's performance in terms of static or dynamic loads. Computer implemented analyses of both casting processes and component design have been carried out independently of one another. This will often have resulted in a design or conditions optimised for either the casting process or for the component's design only. Neglecting interactions between both optimisation loops may result in either conflicting solutions or in inferior use of the material's full potential.

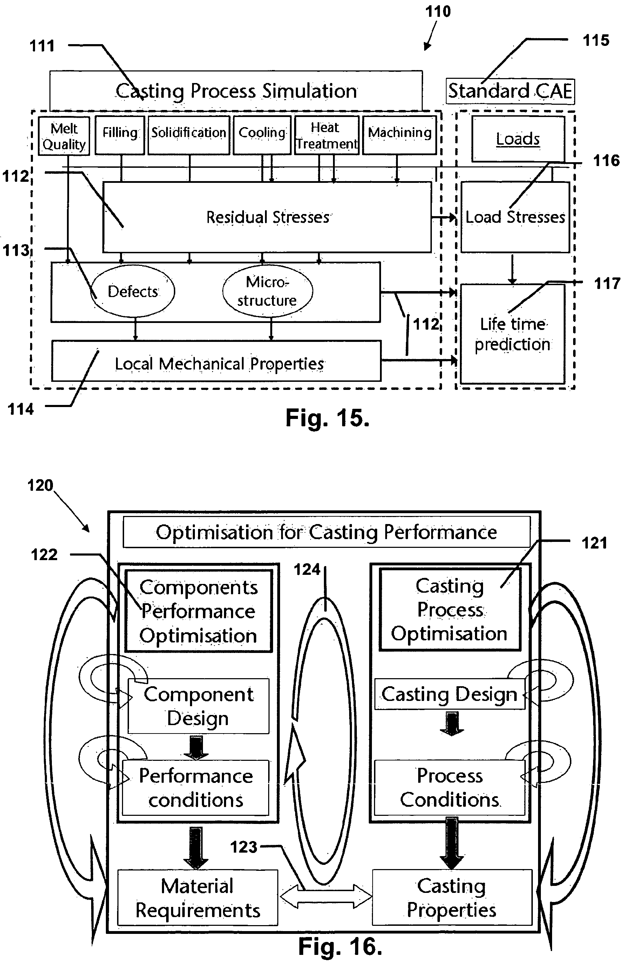

According to an embodiment hereof, both the casting process and the design will be integrated to produce superior component designs. With reference to Figures 15 and 16, different elements for carrying out a numerical optimization of an entire casting design process chain according hereto is illustrated. Fig. 15 generally includes a combination 110 of a casting process 111 with a design process 115; whereas more particularly, the main steps of such an optimisation are the following:
- Use of physical based simulation methods to predict the entire casting process including consideration of melt quality, mould filling, solidification, cooling and subsequent processes such as heat treatment or machining, process 111.
- Use of simulation methods to quantitatively predict local casting properties, such as dendrite arm spacing, structures, porosities, and residual stresses as a function of casting design and casting process conditions, analysis parts 112, 113.
- Use of simulation methods to quantitatively predict local mechanical properties as a function of the above casting properties, analysis part 114.

Further included are:
- Use of in-situ optimisation loops for casting design and casting process conditions to be able to predict and adjust local casting properties, Fig. 16, sub-process 121.
- Use of simulation methods to design casting components Figure 15, process 115, as a function of performance requirements, such as static loads, analysis part 116, and dynamic loads, analysis part 117.
- Use of design optimization methods to optimise the component's shape based on the determined local load conditions, Fig. 16, sub-process 122.
- Method to link the information of local casting properties with performance simulation analyses, Fig. 16, part 123.
- Use of optimisation methods to adjust one or more of component shape, casting process conditions or casting design in order to achieve a match between the local components material requirements and the local casting properties, Fig. 16, part 124.

### Example

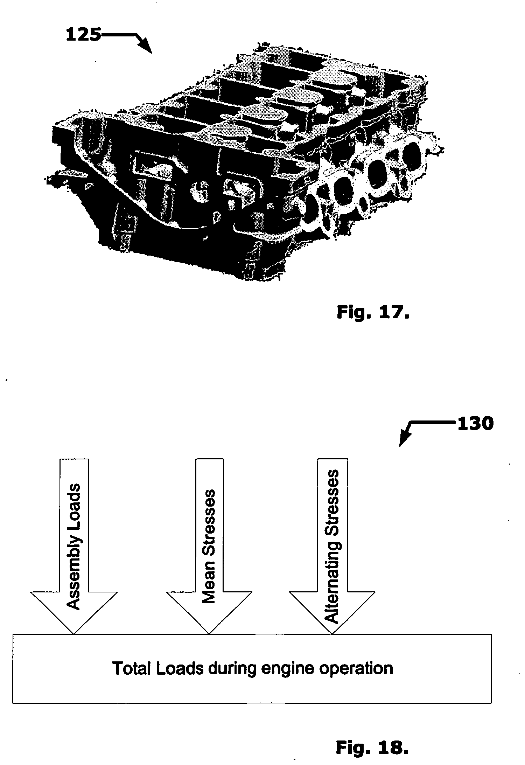

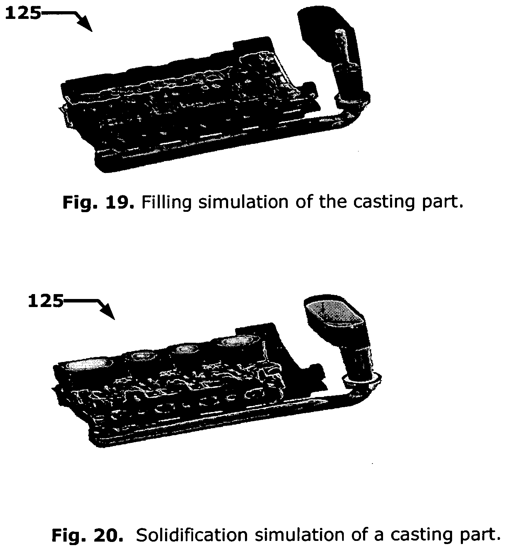

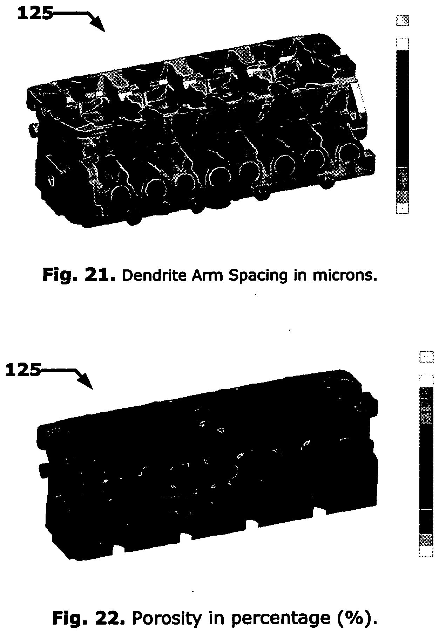

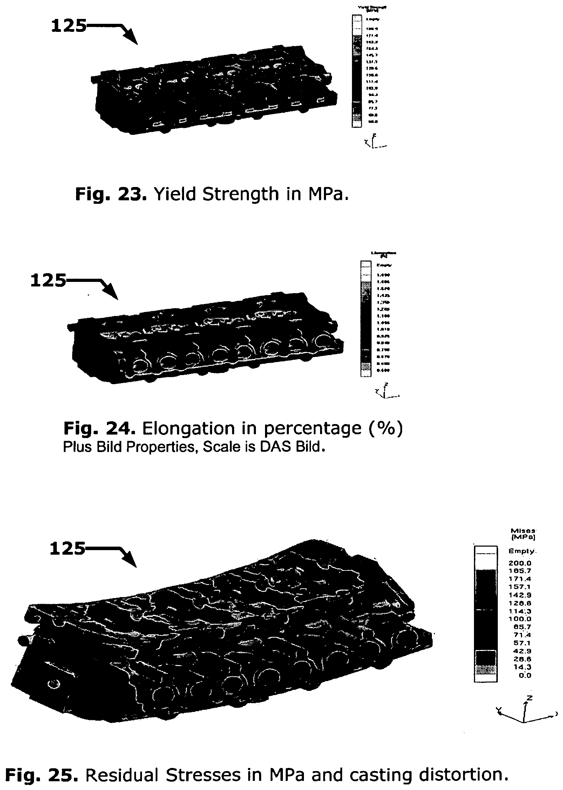

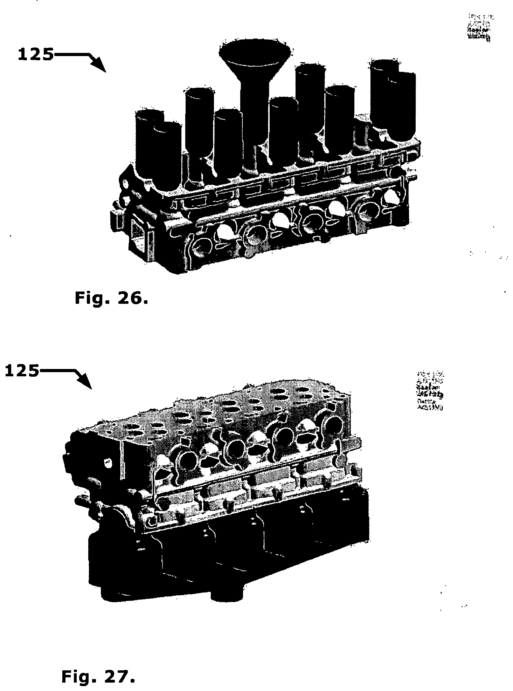

In an example hereof, a cylinder head 125, see Figure 17, may be used as a cast component to be evaluated. Such a component may typically be produced in Aluminium alloys by sand or permanent mould casting processes. Due to its function, the component is subject to static and alternating loads of different kinds during operation. Several exemplar steps of a process hereof follow hereafter.
1. The requirements for the design of a cylinder head 125 may first typically be identified through a complex load analysis of static, thermal or alternating loads, which represent the actual conditions during operation of the engine, see e.g., Figure 18.
2. The design of a cylinder head 125 may then be subjected to a systematic and at times complex analysis in order to determine a component geometry which fulfils the strength and endurance demands as identified in step 1. Note, geometrical modifications are typically used as the sole degree of freedom to meet the required strength of the component. In other words, the component geometry may be iteratively changed (in this step 2) until the stress levels and durability meet the requirements (identified in step 1). In this iterative optimisation process, the material performance resulting from its internal structure or the applied manufacturing process may be considered to be isotropic and uniform.
3. The manufacturing process' of cylinder heads may include multiple stages in which the structure and resulting performance of the material may be influenced in particular by the preparation of the melt, the casting process, the local conditions during solidification and cooling as well as a subsequent heat treatment often applied to establish improved mechanical properties. Thus, during the design of the casting process, the requirements for mould design, gating and risering, as well as process conditions may be identified through a complex analysis of the entire process. Main steps and conditions to be considered may be melt quality, mould filling (Figure 19), solidification and cooling (Figure 20), subsequent heat treatment and machining. This analysis delivers information about the distribution of the micro-structures (Figure 21) and defects (Figure 22) such as porosities in the cast part.
4. This information (micro-structures, Figure 21 and defects, Figure 22) may be used to influence the final local mechanical properties (tensile, yield strength and elongation) in the component as illustrated in Figs. 23 and 24. In parallel, the inhomogeneous cooling of the cast component during either casting or heat treatment may result in a thermally induced stress distribution (shown in Fig. 25), which contributes to the total component load during operation. Note the residual stresses as well as local defect and structure distribution contributes to the total durability of the component, as these are shown and described in Fig. 15, process flow 118.
5. During the optimisation of the production process, the foundry expert has the flexibility to iteratively change mould geometry, gating and risering design and process conditions for the casting and heat treatment stages, see figures 26 and 27. In this iterative optimisation process as described in figure 16, part 121, the casting material's performance may be designed to meet the minimum and uniform material standard specifications in all areas throughout the component.

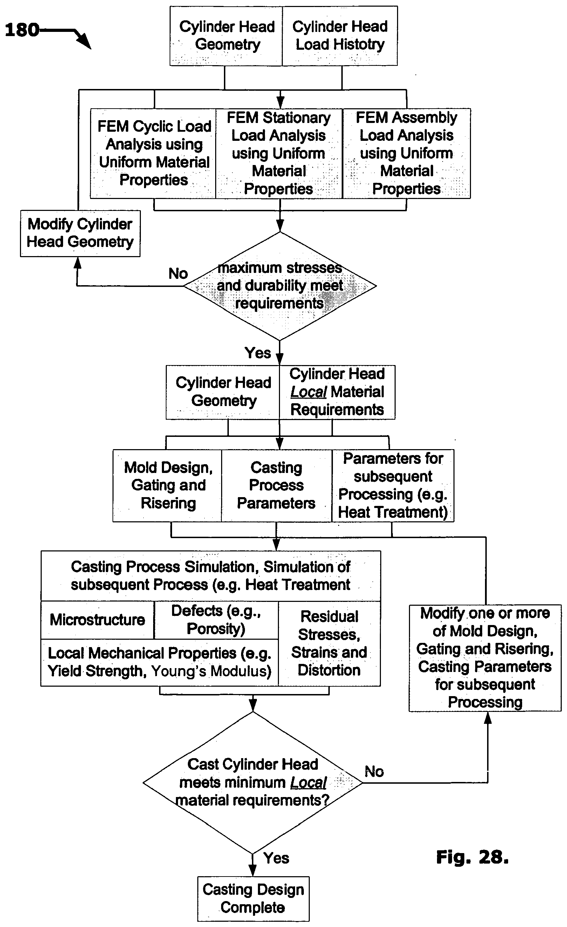

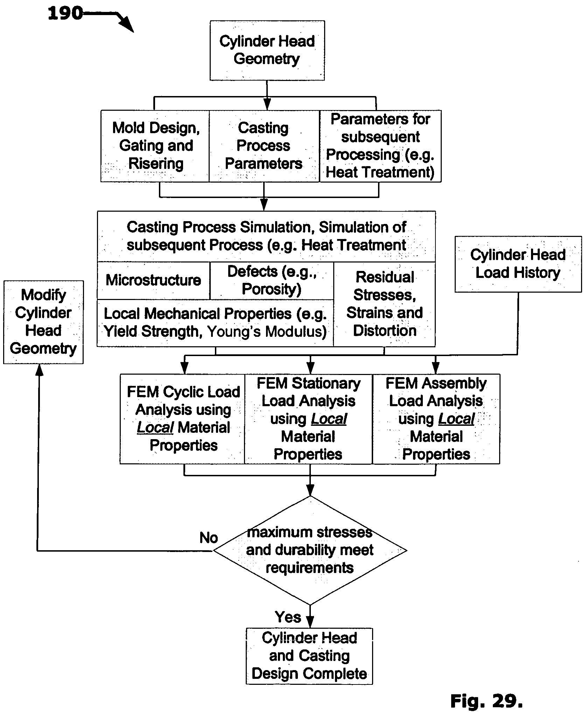

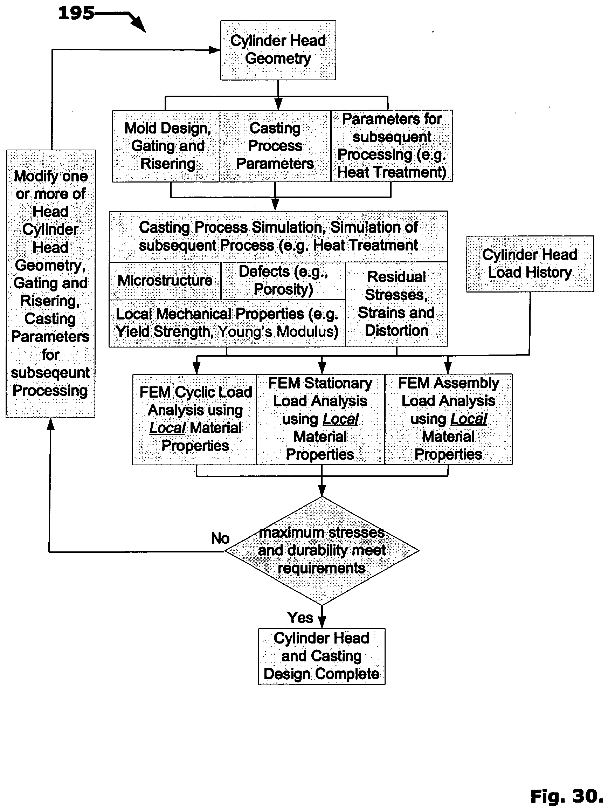

Through the innovative coupling of these two design optimization methodologies, two new optimisation pathways are possible:
A) From the component design analysis and optimization, see step 2, the local material requirements in all parts of the cylinder head are known. This information can be used as the objective to be matched by the local material properties to be achieved through the casting process design optimization loop of pathway 180, see Figure 28.
B) From the casting process design analysis and optimization, see step 4, the local casting properties in all parts of the cylinder head are known. This information can be used in place of the isotropic and uniform properties as described in step 2 resulting either in potential component weight reduction or performance improvement, see pathway 190 in Figure 29. Further to this option B, an innovative global optimization methodology is proposed where the casting's design as well as the component's design is integrated into an iterative optimization loop in order to simultaneously determine the optimal component design (based on local casting properties) and the optimal casting process (based on the local material requirements), see pathway 195; Figure 30.

Although the present invention has been described in detail for purpose of illustration, it is understood that such detail is solely for that purpose, and variations can be made therein by those skilled in the art without departing from the scope of the invention, as solely defined by the appended claims.

## Claims

1. A method for optimizing a process for producing a cast or molded product made in a plurality of different production steps of said process in respect of a predetermined parameter, which predetermined parameter is taken from a group comprising manufacturing cost, material consumption and environmental load, towards an optimal value, said process comprising the steps of:
- defining one or more technical requirements for the cast or molded product,
- providing computer implemented processes that reflect said production steps;
- generating with each computer implemented process one or more solutions for every one of said plurality of production steps that will lead to a cast product that will fulfill the technical requirements resulting in a plurality of individual solutions; and
- determining in a further computer implemented process either by calculating every possible combination of solutions for the production steps or by iterating the calculations of one or more possible combinations of solutions for the production steps which combination of the individual solutions results in an actual process or in a selected sub-set of production steps in which the predetermined parameter is closest to the optimal value.

2. A method according to claim 1, wherein a particular selected sequence of production steps or a solution restraint on a previous and/or a following step created by a solution for a production step is taken into account and used as a boundary condition when the different solutions are generated.

3. A method according to claim 1 or 2, wherein the computer implemented processes include computer aided product design to obtain a digital geometrical representation of the cast product and/or enmeshment of the geometrical representation, specifying the boundary conditions associate with the production steps.

4. A method according to any of claims 1 to 3, further comprising the step of linking back to the computer implemented processes for the production steps with information about the respective optimum manufacturing solution.

5. A method according to claim 1 where the optimal combination of solutions is determined by iterating the calculations of one or more possible combinations of solutions for the production steps, and the iterated simulation runs are carried out after changing either the predetermined parameter or the optimal value.

6. A method according to either of claims 1 or 5 where the optimal combination of solutions is determined by iterating the calculations of one or more possible combinations of solutions for the production steps, and the iterations are carried out by human or computer operation.

7. A method according to any of claims 1, 5 or 6 where the optimal combination of solutions is determined by iterating the calculations of one or more possible combinations of solutions for the production steps, and one or a plurality of criteria may be selected and run as iterations in one or more of parallel, staggered or piecemeal fashions.

8. A method according to claim 7 where the results from all the technical simulation runs are presented on a computer display at substantially the same time in a virtual try out space.

9. A system for optimal casting production comprising: production casting machinery and connected thereto a computer-implemented optimization system including a computer product on a computer readable medium including a software algorithm for performing a method according to any of claims 1-8.

## Patentansprüche

1. Verfahren zur Optimierung eines Prozesses zur Herstellung eines gegossenen oder geformten Produkts, hergestellt durch eine Vielzahl von Produktionsschritten des Prozesses in Bezug auf einen vorab bestimmten Parameter, wobei der vorab bestimmte Parameter aus einer Gruppe stammt, die Herstellungskosten, Materialverbrauch und Umweltbelastung enthält, hin zu einem optimalen Wert, wobei der Prozess die folgenden Schritte umfasst:
- Definieren einer oder mehrerer technischer Anforderungen für das gegossene oder geformte Produkt;
- Bereitstellen computerimplementierter Prozesse, die den Produktionsschritt widerspiegeln;
- Erzeugen mit jedem computerimplementierten Prozess von einer oder mehreren Lösungen für jeden der Vielzahl von Produktionsschritten, die zu einem gegossenen Produkt führen, das die technischen Anforderungen erfüllt, resultierend in einer Vielzahl von individuellen Lösungen; und
- Bestimmen, in einem weiteren computerimplementierten Prozess, entweder durch Berechnen jeder möglichen Kombination von Lösungen für die Produktionsschritte oder durch Wiederholen der Berechnungen für eine oder mehrere mögliche Kombinationen von Lösungen für die Produktionsschritte, welche Kombination der individuellen Lösungen in einem aktuellen Prozess oder einer ausgewählten Teilmenge von Produktionsschritten resultiert, bei denen der vorab bestimmte Parameter dem optimalen Wert am nächsten kommt.

2. Verfahren nach Anspruch 1, wobei eine bestimmte ausgewählte Sequenz von Produktionsschritten oder eine Lösungsbeschränkung in Bezug auf einen vorherigen und/oder einen folgenden Schritt, die durch eine Lösung für einen Produktionsschritt erzeugt werden, berücksichtigt und als Randbedingung verwendet werden, wenn die verschiedenen Lösungen erzeugt werden.

3. Verfahren nach Anspruch 1 oder 2, wobei die computerimplementierten Prozesse eine computergestützte Produktgestaltung einschließen, um eine digitale geometrische Repräsentation des gegossenen Produkts und/oder eine Vernetzung der geometrischen Repräsentation zu erhalten, wobei die mit den Produktionsschritten verbundenen Randbedingungen spezifiziert werden.

4. Verfahren nach einem der Ansprüche 1 bis 3, ferner umfassend den Schritt des Zurückverknüpfens zu den computerimplementierten Prozessen für die Produktionsschritte mit Informationen über die jeweilige optimale Lösung zur Herstellung.

5. Verfahren nach Anspruch 1, wobei die optimale Kombination von Lösungen bestimmt wird, indem die Berechnungen von einer oder mehreren möglichen Kombinationen von Lösungen für die Produktionsschritte wiederholt werden und die wiederholten Simulationsdurchgänge ausgeführt werden, nachdem entweder der vorab bestimmte Parameter oder der optimale Wert geändert wurden.

6. Verfahren nach einem der Ansprüche 1 oder 5, wobei die optimale Kombination von Lösungen bestimmt wird, indem die Berechnungen von einer oder mehreren möglichen Kombinationen von Lösungen für die Produktionsschritte wiederholt werden und die Wiederholungen von einem Menschen oder einem Computer durchgeführt werden.

7. Verfahren nach einem der Ansprüche 1, 5 oder 6, wobei die optimale Kombination von Lösungen bestimmt wird, indem die Berechnungen von einer oder mehreren möglichen Kombinationen von Lösungen für die Produktionsschritte wiederholt werden und eines oder eine Vielzahl von Kriterien ausgewählt und als Wiederholungen einzeln oder zu mehreren auf parallele, gestaffelte und/oder unsystematische Weise ausgeführt werden.

8. Verfahren nach Anspruch 7, bei dem die Ergebnisse aller technischen Simulationsdurchgänge im Wesentlichen gleichzeitig auf einem Computerbildschirm in einem virtuellen Versuchsraum dargestellt werden.

9. System zur optimalen Gussproduktion, umfassend: Maschinen zur Gussproduktion und ein damit verbundenes computerimplementiertes Optimierungssystem mit einem Computerprodukt auf einem computerlesbaren Medium mit einem Software-Algorithmus zum Durchführen eines Verfahrens nach einem der Ansprüche 1 bis 8.

## Revendications

1. Procédé permettant d'optimiser un processus destiné à la production d'un produit de coulée ou d'un produit moulé fabriqué en une pluralité de différentes étapes de production dudit processus par rapport à un paramètre prédéterminé, ledit paramètre prédéterminé est pris dans un groupe comprenant les coûts de fabrication, la consommation de matériau et la charge environnementale, en direction d'une valeur optimale, ledit processus comprenant les étapes de :
- définition d'au moins une prescription technique pour le produit de coulée ou le produit moulé,
- l'apport de processus mis en œuvre par ordinateur qui reflètent lesdites étapes de production ;
- la génération avec chaque processus mis en œuvre par ordinateur d'une ou de plusieurs solutions pour chacune de ladite pluralité d'actions qui mènera à un produit de coulée qui remplira les prescriptions techniques résultant en une pluralité de solutions individuelles ; et
- la détermination dans un processus supplémentaire mis en œuvre par ordinateur soit par le calcul de toute combinaison possible de solutions pour les étapes de production soit par itérations des calculs d'une ou de plusieurs combinaisons possibles de solutions pour les étapes de production, ladite combinaison des solutions individuelles résulte en un processus réel ou en un sous-ensemble choisi d'étapes de production dans lequel le paramètre prédéfini est le plus proche de la valeur optimale.

2. Procédé selon la revendication 1, dans lequel une séquence choisie particulière des étapes de production ou une contrainte de solutions sur une étape précédente et/ou suivante créée par une solution pour une étape de production est prise en compte et utilisée en tant que condition limite lorsque les différentes solutions sont générées.

3. Procédé selon la revendication 1 ou 2, dans lequel les processus mis en place par ordinateur comprennent une conception de produit assistée par ordinateur afin d'obtenir une représentation géométrique digitale du produit de coulée et/ou l'enchevêtrement de la représentation géométrique, permettant de spécifier les conditions limites associées aux étapes de production.

4. Procédé selon l'une quelconque des revendications 1 à 3, comprenant en outre l'étape de rétroaction aux processus mis en place par ordinateur pour les étapes de production avec les informations concernant la solution de fabrication optimale respective.

5. Procédé selon la revendication 1, dans lequel la combinaison optimale de solutions est déterminée par l'itération des calculs d'une ou de plusieurs combinaisons possibles de solutions pour les étapes de production, et les simulations itérées sont réalisées après le changement soit du paramètre prédéterminé soit de la valeur optimale.

6. Procédé selon l'une quelconque des revendications 1 ou 5, dans lequel la combinaison optimale de solutions est déterminée par l'itération des calculs d'une ou de plusieurs combinaisons possibles de solutions pour les étapes de production, et les itérations sont effectuées au moyen d'une opération humaine ou informatique.

7. Procédé selon l'une quelconque des revendications 1, 5 ou 6, la combinaison optimale de solutions est déterminée par l'itération des calculs d'une de plusieurs combinaisons possibles de solutions pour les étapes de production, et un ou une pluralité de critères peuvent être choisis et exécutés comme des itérations d'une ou de plusieurs manières qui soient parallèle, échelonnée ou fragmentaire.

8. Procédé selon la revendication 7, dans lequel les résultats provenant de toutes les simulations techniques sont présentés sur un affichage informatique essentiellement au même moment dans un espace d'essai virtuel.

9. Système destiné à une production de coulée optimale comprenant : la production de machines de coulée et relié à celles-ci un système d'optimisation mis en œuvre par ordinateur comprenant un produit informatique sur un support lisible par ordinateur comprenant un algorithme de logiciel permettant de réaliser un procédé selon l'une quelconque des revendications 1 à 8.
